# EUROPEAN PATENT SPECIFICATION

(11) **EP 3 953 402 B1**
(45) Date of publication and mention of the grant of the patent: **14.08.2024**
(21) Application number: 20714226.6
(22) Date of filing: 31.03.2020
(51) Int. Cl.: C08F 210/06, C08J 9/00, C08F 255/02, C08F 8/00, C08L 23/12, C08F 4/659, C08G 81/02, C08J 9/14

(54) **USE OF A COMPOSITION FOR THE MANUFACTURE OF A FOAMED ARTICLE**
VERWENDUNG EINER ZUSAMMENSETZUNG ZUR HERSTELLUNG EINES GESCHÄUMTEN ARTIKELS
UTILISATION D'UNE COMPOSITION POUR LA FABRICATION D'UN ARTICLE EN MOUSSE

(30) Priority: 11.04.2019 EP 19168653
(43) Date of publication of application: 16.02.2022
(73) Proprietor: SABIC Global Technologies B.V., 4612 PX Bergen op Zoom (NL)
(72) Inventor: DUCHATEAU, Robbert, 6160 GA Geleen (NL); JASINSKA-WALC, Lidia, 6160 GA Geleen (NL); BOUYAHYI, Miloud, 6160 GA Geleen (NL); YANG, Lanti, 6160 GA Geleen (NL); DEGENHART, Peter, 6160 GA Geleen (NL); ENRICO, Troisi, 6160 GA Geleen (NL)
(74) Representative: Sabic Intellectual Property Group
(86) International application number: PCT/EP2020/059052
(87) International publication number: WO 2020/207853

(56) References cited:
- WO-A1-2009/042323
- WO-A1-2017/097617
- CN-A- 105 368 028
- JP-A- 2010 254 894

## Description

The present invention relates to the use of a polypropylene composition for the manufacture of a foamed article. The present invention further relates to a method for the manufacture of a foamed article and to a composition suitable to be foamed.

Foaming of polyolefins is known in the art and may be accomplished by bringing the composition into a molten state and foaming the melt using either a physical or a chemical blowing agent. It is of high importance that the molten composition has a certain threshold melt strength as otherwise the foaming agent may diffuse out of the composition easily and/or formed cells will collapse easily. In addition, if there is insufficient melt strength then formation of stable foams may not be possible at all. Increasing the melt strength of polymers may be accomplished by introducing a certain amount of branching in the polymers and/or by (partially) crosslinking the polymers prior to foaming.

US 2012/0190761 discloses a composition for preparing an expandable polypropylene carbonate, comprising (A) 100 parts by weight of a base resin consisting of (a1), 10 to 90 wt% of a polypropylene carbonate resin and (a2) 10 to 90 wt% of a thermoplastic resin; (B) 0.1 to 20 parts by weight of a polypropylene carbonate compatibiliser; (C) 0.01 to 10 parts by weight of a cross-linking agent, a chain extender, or a mixture thereof; (D) 0.1 to 10 parts by weight of an inorganic material; and (E) 0.01 to 1 parts by weight of a heat stabiliser.

US 2013/0172434 discloses a method for preparing a resin composition for an expandable polypropylene carbonate, the method comprising 1) a cross-linking step of using a polypropylene carbonate resin (a1), a thermoplastic resin (a2), and a cross-linking agent, a chain extender, or a mixture thereof (C); and 2) a mixing step of mixing the obtained material in step 1),a polypropylene carbonate compatibiliser (B), an inorganic material (D), and a heat stabiliser (E) with one another.

Neither US 2012/0190761 nor US 2013/0172434 relates to the foaming of polypropylene based materials. In addition, these references suggest the use of a cross-linking agent, such as an iso-cyanate, for making the material suitable for foaming.

Compositions comprising a polyolefin, a polycarbonate and a compatibiliser are known from WO 2017/097617. More in particular that document discloses a composition comprising a polyolefin, polycarbonate and a compatibiliser, wherein said compatibiliser is a block or graft copolymer comprising a polyolefin part and a polyester part, said polyester part having an average M/F ratio of from 2 - 25, wherein M is the number of backbone carbon atoms in the polyester not including the carbonyl carbons and F is the number of ester groups in the polyester. In this composition the compatibiliser may be an AB or BAB type block copolymer with A representing polyolefin and B representing polyester, or a graft copolymer of structure ABn having a polyolefin backbone with n polyester branches grafted thereon, n being at least 1.

Polypropylene and aromatic polycarbonate are readily available, relatively low cost and well-accepted materials for a variety of applications.

CN105368028 provide a CO2-propylene oxide copolymer/ polypropylene composite material and a CO2-propylene oxide copolymer/ polypropylene foam which has good shrinkage resistance. The inventors found that a composition containing polypropylene as a major component and aromatic polycarbonate as a minor component, wherein the polycarbonate and polypropylene are compatibilised with a specific compatibiliser have an increased melt strength. The present inventors further found that such compositions can be foamed to foamed articles having predominantly closed cells. In addition, nowadays, circular economy is plebiscite by regulation and customer pressure. Therefore, there is a need for more and more recycled foamed articles and material, which support recycle process conditions.

Accordingly, the present invention relates to the use of a composition comprising
- 60 - 98 wt.% of polypropylene
- 2 - 40 wt.% of aromatic polycarbonate
- 0.1 - 10 wt.% of compatibiliser
   wherein
- the compatibiliser is a BAB or AB type of block copolymer comprising a polypropylene block A and (a) polyester or polycarbonate block(s) B, or wherein the compatibiliser is a graft copolymer of the type ABn having a polypropylene backbone A and polyester or polycarbonate block(s) B grafted thereon, with n being at least 1, and
- the polyester or polycarbonate block(s) B have an average M/F ratio from 2 - 25, wherein M is the number of backbone carbon atoms in the polyester or polycarbonate not including carbonyl carbon atoms, and F is number of ester or carbonate groups in the polyester or polycarbonate block(s),
- wherein the wt.% is based on the sum of the amount polypropylene, polycarbonate and compatibiliser, for the manufacture of a foamed article.

Surprisingly, such composition in particular due to the presence of aromatic polycarbonate instead of non-aromatic polycarbonate allow an increased melt strength, which is compatible with high temperature recycle process conditions.

For none limitative example, Bisphenol A polycarbonate only starts to degrade above 350 °C (5% weight loss) whereas polypropylene carbonate starts to degrade at 180 °C (5% weight loss) releasing the volatiles CO₂ and cyclic propylene carbonate.

However, the process to manufacture a foamed article use temperature above 180 °C. Therefore, polypropylene carbonate is not an appropriate material for the manufacture of a foamed article.

In addition, the increased melt strength of the composition allow direct extrusion foaming having predominantly closed cells with a density inferior to 100 kg/m³.

### Polypropylene

In principle any type of polypropylene may be used in the present invention and accordingly the polypropylene may be one or more of
- a propylene homopolymer,
- a propylene - α-olefin random copolymer, preferably a propylene ethylene or a propylene C₄ - C₈ α-olefin random copolymer with up to 5 wt.%, preferably up to 3 wt.%, of ethylene and/or at least one C₄ - C₈ α-olefin based on the weight of the copolymer
- a propylene - α-olefin block copolymer, preferably a propylene ethylene or a propylene C₄ - C₈ α-olefin block copolymer
- a hetero-phasic polypropylene copolymer comprising a matrix phase and a dispersed phase, the matrix phase consisting of a propylene homopolymer and/or a propylene random copolymer with up to 5 wt.%, preferably up to 3 wt.%, of ethylene and/or at least one C₄ - C₈ α-olefin, the wt.% being based on the matrix phase, and the dispersed phase consisting of a random ethylene - C₃ - C₈ α-olefin, preferably random ethylenepropylene copolymer.

Mixtures of at least two of the aforementioned polypropylene materials may also be used, including mixtures of two or more of polypropylene materials of the same type, such as a mixture of two polypropylene homopolymers.

Isotactic polypropylene is preferred.

If the polypropylene is a hetero-phasic copolymer it is preferred that the matrix phase is a propylene homopolymer and/or a propylene - ethylene random copolymer with up to 3 wt.% of ethylene and further that the dispersed phase is an ethylene propylene copolymer with from 20 - 65 wt.% of ethylene, the wt.% based on the dispersed phase. The amount of dispersed phase may be from 5 - 40 such as from 15-30 wt.% based on the weight of the heterophasic copolymer.

In an embodiment, the polypropylene does not contain or consist of heterophasic polypropylene.

The polypropylene is preferably a propylene homopolymer or a random propylene and ethylene or C₄-C₈ alpha olefin copolymer containing at most 5 wt.%, preferably at most 3 wt.% on the basis of the weight of the polypropylene, of said ethylene or C₄ - C₈ alpha olefin. Preferably the random copolymer is a propylene - ethylene random copolymer with up to 5 wt.%, preferably up to 3 wt.% of ethylene based on the weight of the random copolymer.

The amount of polypropylene in the composition is at least 70 wt.%, preferably at least 80 wt.%. The amount of polypropylene is at most 98 wt.%, preferably at most 95 wt.%, or 90 wt.%. The amount of polypropylene may be from 70 - 95, from 75 - 90 wt.%. The melt flow rate of the polypropylene may vary depending on the composition and the requirements of the final product and is generally from 0.1 - 60 g/ 1 0min as measured in accordance with ISO 1133 (2.16 kg, 230°C). Preferably, however, the melt flow rate of the polypropylene is from 0.1 - 20 g/10. More preferably, the melt flow rate is from 0.5 to 10 g/10 min or 1 - 5 g/10min.

### Aromatic polycarbonate

The aromatic polycarbonate can be any polycarbonate obtained by reacting a bisphenol with a carbonate source. Accordingly the aromatic polycarbonate may be obtained by the so-called interfacial process wherein a bisphenol, preferably bisphenol A, is reacted with phosgene. Alternatively, the aromatic polycarbonate can be obtained by the melt process, or melt transesterification process, by reacting a bisphenol, preferably bisphenol A, with a diarylcarbonate, preferably diphenyl carbonate. The aromatic polycarbonate may also be a copolymer of at least one first bisphenol and at least one second bisphenol or a diol. The aromatic polycarbonate may be branched or linear, linear polycarbonate being preferred.

The term aromatic polycarbonate in the context of the present invention means that the polycarbonate contains aromatic rings in the backbone. For the avoidance of doubt copolymers of bisphenols with aliphatic diols are considered as aromatic polycarbonate.

It is preferred that the aromatic polycarbonate is bisphenol A polycarbonate. Such and other polycarbonates are commercially available from SABIC under the trademark LEXAN^{™}.

The amount of aromatic polycarbonate is from 5 - 20 wt.%, preferably from 10 - 20 wt.%.

Typically the melt flow rate of the aromatic polycarbonate will be in the range of from 1 - 30 g/10min, such as from 5 - 25 g/10 min or 5 - 15 g/10 min in accordance with ASTM D1238 (300°C, 1.2 kg). Lower molecular weight materials, i.e. materials with a higher melt flow rate, may be used yet may not yield a high degree of expansion upon foaming.

Without willing to be bound to it, the present inventors believe that in the composition the polycarbonate is present as domains, which act similar to physical crosslinks, and thereby allow the composition to have an improved melt strength over the virgin polypropylene so that it can be foamed more easily.

### Compatibiliser

The compatibiliser is a BAB or AB type of block copolymer comprising a polypropylene block A and a polyester or polycarbonate block B, or a graft copolymer of the type ABn having a polypropylene backbone A and polyester or polycarbonate block(s) B grafted thereon, with n being at least 1.

The block copolymer is preferably of the type AB or BAB.

The block copolymer may also be a graft copolymer of structure ABn having a polypropylene backbone with n polyester branches grafted thereon, n being at least 1.

For the graft copolymers, the backbone may be considered as the polypropylene block. The amount of grafts per 1000 main chain carbon atoms may be for example from 1 - 10. The number of grafts may not be too high because otherwise the polypropylene backbone will not interact sufficiently with the polypropylene phase.

In an embodiment where a block copolymer contains two or more B (i.e. polyester) blocks these B blocks may be the same or different in length, i.e. may have the same or different molecular weight, depending on the conditions of the process to manufacture the block copolymer.

In an embodiment where a graft copolymer contains two or more B (i.e. polyester) blocks these B blocks may be the same or different in length, i.e. may have the same or different molecular weight, depending on the conditions of the process to manufacture the graft copolymer.

The weight average molecular weight of the compatibiliser may be from 5,000 to 300,000 g/mol, preferably from 60,000 to 250,000 g/mol, said weight average molecular weight being determined as the polyethylene-equivalent molecular weight by high temperature size exclusion chromatography performed at 150°C in o-dichlorobenzene using polystyrene as standard.

The amount of compatibiliser is from 0.1 - 10 wt.% such as from 0.5 - 10 wt.%, from 1 - 8 wt.%, or 2 - 10 wt.% or 3 - 8 wt.% or preferably 4 - 7 wt.%.

The blocks or grafts B are polyester or polycarbonate blocks with an M/F ratio of from 2 - 25 with M being the number of carbon atoms in the polyester or polycarbonate not including the carbonyl carbon atom and F the amount of ester or carbonate groups in the polyester or polycarbonate as the case may be. The value of M only applies to carbon atoms and not to any other heteroatoms that may be in the chain between ester functionalities. Likewise, the number M represents only the backbone carbon atoms and not any side groups. For example, if the polyester is polycaprolactone (PCL) M/F = 5/1, if the polyester is pentadecalactone (PPDL) then M/F = 14 and if the polyester is polyethylene brassylate) (PEB) then M/F = (11+2)/2 = 6.5. In case of aliphatic or aromatic ring structures, such as in particular C6 aromatic (phenyl) groups as typically found in bisphenol A type of polycarbonate, the number of carbon atoms is the shortest amount to go from one side of the ring to the other. Thus, by way of example the amount of carbon atoms for a phenyl group is to be counted as 4 and not 6. Accordingly, for bisphenol A type of polycarbonate the amount of carbon atoms in-between two carbonate groups would be 9.

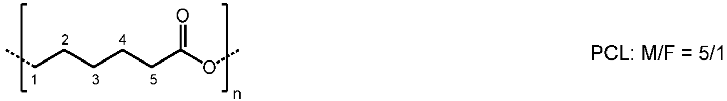

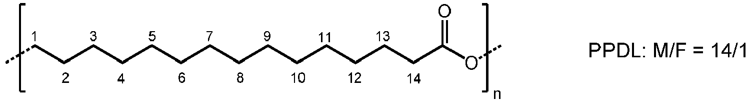

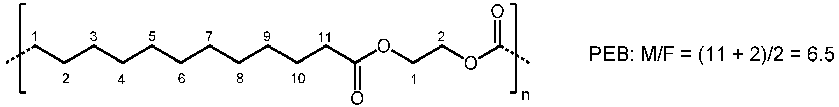

Preferably the M/F ratio is from 2 - 15, more preferably from 3 - 10, even further preferably from 4 - 7. The M/F ratio is typically a numerical average. Accordingly, when two or more esters/lactones (or carbonates) are used in the polyester, the average M/F ratio may be obtained by calculating the M/F ratio for each ester/lactone and then calculating the average of the values obtained for the different esters/lactones. The M/F ratio may be determined by NMR, especially by adding the integrations corresponding to backbone carbon atoms and dividing the result by the added integrations corresponding to the carbon atoms of the ester (or carbonate) functions.

The compatibiliser may contain one or more polyester blocks, which may be aromatic or non-aromatic. The backbone of the polyester can be saturated meaning it preferably does not contain any double bonds. It is preferred that the backbone of the polyester is aliphatic. The backbone of the polyester may alternatively comprise short, linear or branched, aliphatic branches such as methyl, ethyl, propyl, butyl, pentyl or hexyl branches. The backbone may also contain one or more heteroatoms such as oxygen, nitrogen or sulphur. For the avoidance of doubt, such heteroatoms are not counted when determining the number M for calculating the M/F ratio. It is preferred that the backbone of the polyester is for example based on methylene units, i.e. that the ester groups are linked via unbranched aliphatic groups.

The polyester of the polyester block(s) may be a polyester homopolymer or a polyester copolymer composed for example of different monomers, i.e. different diols, diacids, hydroxyacids, lactones also including for example dilactones and/or oligolactones, the combination of epoxides and anhydrides and/or CO₂, or (cyclic) carbonates which can be either aliphatic or aromatic. Instead of diacids and/or hydroxyacids, their corresponding diesters and/or hydroxyesters, especially for example dimethyl esters and hydroxymethylester, respectively, can be used to form the polyesters, especially by transesterification, as well.

A polyester of the polyester block(s) according to the invention may thereby also be a polyester-ether, which may comprise both ester and ether functionalities, or an polyester-carbonate, which may comprise both carboxylic acid ester functionalities and carbonylic acid ester (carbonate) functionalities.

Typical examples of polyester homopolymers include the homopolymers obtainable by the ring-opening polymerisation (ROP) of for example β-butyrolactone, glycolide, L-lactide, ε-caprolactone, cyclic butylene adipate or cyclic ethylene brassylate.

Typical examples of polyester copolymers include copolymers of at least two lactones from a group including for example β-butyrolactone, glycolide, L-lactide, ε-caprolactone, cyclic butylene adipate and cyclic ethylene brassylate.

Other typical examples of polyester copolymers may include AB type copolyesters prepared for example using one or more C₂-C₃₂ hydroxy acids and/or a combination of one or more hydroxy acids and one or more cyclic esters (especially such as for example the ones mentioned above), provided the polyester has an average M/F (as defined herein) of from 2 - 10. The term Cₓ-C_{y} hydroxy acid may thereby refer to a range regarding the amount of carbon atoms in the hydroxy acid, so that C₂-C₃₂ hydroxy acids for example means a range of two to thirty two carbon atoms in the hydroxy acid.

Other typical examples of polyester copolymers include AABB type copolyesters prepared of a combination of C₂-C₃₀ diols and C₂-C₃₂ diacids and/or a combination of epoxides and anhydrides, provided the polyester copolymer has an average M/F (as defined herein) of from 2 - 10. The term Cₓ refers to the amount of carbon atoms x in the diol or diacid, respectively.

Diacids include but are not limited to for example oxalic acid, malonic acid, succinic acid, glutaric acid, adipic acid, heptanedioic acid, octanedioic acid, nonanedioic acid and their unsaturated and branched analogues. The diols include but are not limited to for example ethylene glycol, propanediol, butanediol, pentanediol, hexandediol, octanediol, decanediol. The diacids and diols might comprise short, linear or branched, aliphatic branches such as methyl, ethyl, propyl, butyl, pentyl or hexyl branches. The diols and diacids might also contain a heteroatom like an oxygen, nitrogen or sulphur. Instead of diacids, their corresponding diesters, especially for example dimethyl esters, can be used as well. Epoxides include but are not limited to ethylene oxide, propylene oxide, butylene oxide, cyclohexene oxide, 4-vinyl-cyclohexene oxide, limonene oxide, and anhydrides include but are not limited to phthalic anhydride, succinic anhydride and maleic anhydride.

Instead of a combination of one or more diol and diacid, cyclic dilactones and/or a combination of epoxides and anhydrides can also be added to produce AABB copolyesters with the desired M/F (as defined herein) of from 2 - 10. Typical examples of cyclic dilactones are: ethylene adipate, ethylene brassylate, butylene adipate.

Another type of polyester copolymers include AB/AABB copolyesters, which can for example be prepared of a combination of lactones and/or hydroxyacids and dilactones and/or the combination of C₂-C₃₀ diols and C₂-C₃₂ diacids and/or a combination epoxides and anhydrides, which result in polyesters having an average M/F (as defined herein) of from 2 - 10.

Preferably the polyester or copolyester of the polyester block(s) is selected for example from poly(ε-caprolactone) and/or polyethylene brassylate).

More in general the polyester or copolyester of the polyester block(s) may be for example of a general structure 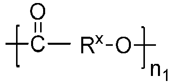 wherein
R^{x} is an organic group, preferably an aliphatic group having an average length of ≥ 2 and ≤ 10 carbon atoms and n₁ is the number of repeating units, which generally is at least 25, preferably at least 50 such as at least 100, at least 300, at least 400. The number of repeating units n1 is preferably for example between 50 and 5000, preferably between 100 and 4500.

The organic group R^{x} may thereby be a branched or straight hydrocarbon group optionally containing one or more heteroatoms provided that the atom neighbouring the -O- is a carbon atom, i.e. not a heteroatom. R^{x} may contain one or more unsaturations, like -C=C-. Preferably, R^{x} is a branched or straight hydrocarbon group, more preferably R^{x} is a branched or straight aliphatic group. R^{x} is preferably a saturated aliphatic group. In that respect the term chain length as used herein refers to the shortest number of atoms between two ester functionalities (O=)C-O-. Hence, the "chain length" does not include any optional branches or side groups. For example, if R^{x} is (C₄H₈) the chain length is four. Similarly, if R^{x} is CH₂-C(CH₃)₂-CH₂-CH₂ the chain length is also four. In the general formula above R^{x} may be the same or different throughout the polyester provided the average chain length is ≥ 2 and ≤ 10 carbon atoms.

The following general (co)polyester structures can be considered, which structures are more detailed embodiments of the general structure provided above:

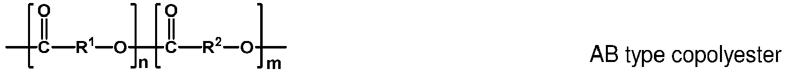

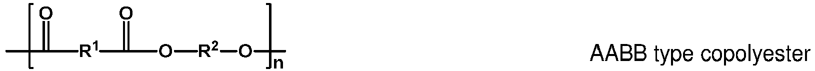

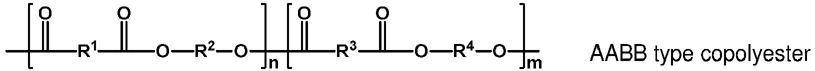

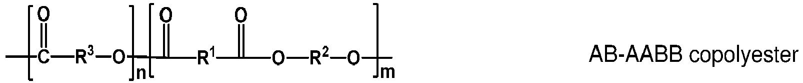

The chain lengths of R¹, R², R³ and R⁴ are selected such that for the polyester the M/F ratio (as defined herein) is ≥ 2 and ≤ 10. The description for R^{x} above also applies for R¹-R⁴.

The average M/F ratio (as defined herein) may preferably for example be ≤ 25, ≤ 20, ≤ 15, ≤ 10 or ≤ 9 or ≤ 8 or ≤ 7. Accordingly, the M/F ratio (as defined herein) may be for example ≥ 2 or ≥ 3 or ≥ 4 or > 6.

In the embodiment wherein the compatibiliser contains a polycarbonate block in the compatibiliser, the polycarbonate may be aromatic or non-aromatic, but is preferably aromatic since this will provide enhanced affinity with the aromatic polycarbonate in the composition and will have a higher thermal stability. Preferably, the polycarbonate block is chemically similar to the polycarbonate of the composition. A preferred polycarbonate block is a bisphenol A polycarbonate block.

Contrary to the polycarbonate of the composition, the polycarbonate block of the compatibiliser may be an aliphatic polycarbonate such as for example obtainable by the ring opening polymerisation f cyclic carbonic acid esters and/or by the copolymerisation of epoxides and CO₂.

The polypropylene block of the compatibiliser and/or the backbone of the graft copolymer is preferably a propylene homopolymer or a random propylene ethylene or C₄ - C₈ alpha olefin copolymer, containing at most 5 wt.%, preferably at most 4 wt.% on the basis of the weight of the backbone, of ethylene or C₄ - C₈ alpha olefin.

The amount of comonomers should be limited so as to maintain a certain degree of crystallinity, which is desirable for good mechanical properties of the final foam product. Accordingly, it is preferred that the polypropylene block or backbone is a semi-crystalline propylene homopolymer block. In other words, the polypropylene block or backbone is preferably an isotactic polypropylene.

Suitable compatibilisers and their method of manufacture include those disclosed in WO 2017/097617, the contents of which are hereby incorporated by reference.

### Block copolymers

Accordingly and in an embodiment block copolymers can be manufactured for example by a three-step method.

In a first step a propylene, and optionally another olefinic comonomer is/are polymerised using a catalyst system to obtain a first polypropylene block containing a main group metal on at least one chain end; the catalyst system comprising:
i) a metal catalyst or metal catalyst precursor comprising a metal from Group 3-10 of the IUPAC Periodic Table of elements; and
ii) at least one type of chain transfer agent; and
iii) optionally a co-catalyst;

Thus, in the first step a polypropylene homopolymer or copolymer is prepared by means of coordinative chain transfer polymerisation (CCTP) in the presence of a catalyst, cocatalyst, at least one type of chain transfer agent and optionally an additional chain shuttling agent. Chain transfer and/or chain shuttling agents used are typically for example aluminium-, boron- and/or zinc hydrocarbyl species. This process results in polypropylene chains that are end-functionalised with a metal atom, which is susceptible to react with an oxidizing agent such as oxygen.

In a second step the first polypropylene block containing a main group metal on at least one chain end obtained in in the first step may be reacted with at least one type of oxidizing agent and/or subsequently at least one type of metal substituting agent to obtain a first polypropylene block containing at least one functionalised chain end. Preferably, the functionalised chain end comprises a hydroxyl group or a carboxylic acid group.

Thus, during the second step the product obtained from the first step may be treated for example with oxygen, as oxidizing agent, optionally followed by a protic agent, such as acidified alcohol as a metal substituting agent, to remove the metal affording a hydroxyl end-functionalised polypropylene product.

In a third step at least one second polymer block is formed on the first polypropylene block, wherein as an initiator the functionalised chain end of the first polypropylene block obtained in the second step may be used to obtain the block copolymer. Thus, in the third step the product of the second step may be used as a macro-initiator for the formation of the diblock copolymer.

Alternatively, the third step mentioned above can also be performed with preformed or otherwise obtained polypropylenes preferably for example with a functionalised chain end that can be used as a macro-initiator to obtain the second polymer block. In such a case, the first and/or second steps are optional.

The third step can be performed for example by transesterification of a preformed transesterifiable polymer, especially for example a preformed polyester and/or by the ring-opening polymerisation (ROP) of lactones, including by way of example the ROP of mono-lactones, dilactones and/or oligolactones.

A transesterifiable polymer in the sense of the invention may be a polyester, a polycarbonate, or a poly(ester-co-carbonate) also referred to sometimes as polyester-carbonate.

During the third step, ROP of lactones and/or transesterification for example with a preformed transesterifiable polymer, especially for example a preformed polyester and/or a preformed polycarbonate is carried out in the presence of the hydroxyl chain-end functionalised polypropylene product during the second step and a suitable ROP and/or transesterification catalyst. The third step may be carried out in hydrocarbon solvent, especially an aromatic hydrocarbon solvent. Alternatively and in particular for transesterification, the third step can be carried out the melt such as for example by means of reactive extrusion.

The steps described above can be performed in a cascade-like process for example either in the same or in subsequent/connected reactors or vessels, preferably without additional intermediary and/or workup and/or drying and/or purification steps, even more preferred continuously. In a cascade-like process, the polymer preparation can also be carried out for example without a metal-substitution step, especially without a hydrolysis step. It should be noted that an extruder can also be considered as a reactor in the context of the present invention.

### Graft copolymer

The graft copolymer, i.e. the copolymer wherein polyester or polycarbonate blocks are grafted on or from a polypropylene backbone, can be manufactured for example by a three-step method.

In a first step propylene, and at least one second type of metal-pacified functionalised olefin monomer are copolymerised using a catalyst system to obtain a polypropylene main chain having one or multiple metal-pacified functionalised short chain branches, the catalyst system comprising:
i) a metal catalyst or metal catalyst precursor comprising a metal from Group 3-10 of the IUPAC Periodic Table of elements;
ii) optionally a co-catalyst and/or scavenger;
iii) optionally a chain transfer agent

Thus in the first step propylene and optionally ethylene or a C₄-C₈ alpha olefin is copolymerised using for example a pacified hydroxyl or acid functionalised olefin comonomer in the presence of a catalyst and a cocatalyst, similarly as any other catalytic olefin copolymerisation, with the difference that the hydroxyl-functionalised or acid-functionalised olefinic comonomer is pacified by reacting it with a metal hydrocarbyl, especially for example an aluminium alkyl such as for example TiBA, prior and/or during to the copolymerisation.

In a second optional step the polypropylene main chain having one or multiple metal-pacified functionalised short chain branches so obtained is reacted with at least one metal substituting agent to obtain a polypropylene main chain having one or multiple functionalised short chain branches; Preferably the functionalised chain end comprises a hydroxyl group or a carboxylic acid group.

Thus, during the second step, the protective group may be removed by treating the product with a protic agent such as acidified alcohol, as metal substituting agent. The product of the second is a random copolymer of propylene and a hydroxyl-functionalised or acid-functionalised olefin, where the hydroxyl or acid functionalities may be located on the short chain branches, especially for example at their ends. As noted, a minor amount, of ethylene or C₄-C₈ alpha olefin may be present during the polymerisation. Preferably, only propylene is used. In a third step one or more polymer grafts are formed on the polypropylene main chain, wherein as initiators the functionalised short chain branches on the polypropylene main chain obtained in the second step can be used to obtain the graft copolymer. This step can be performed for example by transesterification of a preformed transesterifiable polymer, especially for example a preformed polyester and/or a preformed polycarbonate and/or by ROP of lactones, also including for example dilactones and/or oligolactones, and/or cyclic carbonates and/or a combination of epoxides and anhydrides and/or CO₂. This third step is essentially similar to the third step disclosed herein for the manufacture of block copolymers.

Thus, the product of the second step may subsequently be used in the third step as a macro-initiator for the formation of graft copolymer.

Alternatively, the third step can be performed with preformed or otherwise obtained polypropylenes with at least one, preferably at least two or more pending functionalities.

During the third step ROP of lactones or transesterification for example with a preformed transesterifiable polymer, especially for example a preformed polyester and/or a preformed polycarbonate is carried out in the presence of the random copolymer of propylene and hydroxyl-functionalised olefins obtained in the second step and a ROP and/or transesterification catalyst. The third step can be carried out in a hydrocarbon solvent, especially an aromatic hydrocarbon solvent. Alternatively and in particular for transesterification, the third step can be carried out the melt such as for example by means of reactive extrusion.

The steps described above can be performed in a cascade-like process for example either in the same or in subsequent/connected reactors or vessels, preferably without additional intermediary and/or workup and/or drying and/or purification steps, even more preferred continuously. In a cascade-like process, the polymer preparation can also be carried out for example without a metal-substitution step, especially without a hydrolysis step. It should be noted that an extruder can also be considered as a reactor in the context of the present invention.

### Further components

The composition disclosed herein may contain further components common in the art such as flame-retardants, fillers such as mineral fillers like talc, reinforcing agents like glass fibres or carbon fibres, colorants such as pigments or dyes, UV stabilisers, antioxidants, mould release agents. The amount of such additives is at most 5 parts per 100 parts by weight of polypropylene, polycarbonate and compatibiliser.

### Foam

The composition as disclosed herein may be used to manufacture foams with closed cells. The amount of closed cells of the foam can thereby be measured for example according ASTM D2856. For closed cell foams in the sense of the invention, the amount of closed cells may be from 25 - 100 %, preferably from 30 - 99%, more preferably from 40 - 98 %. Foams with an amount of closed cells of at least 50, 60 or 70% are even more preferred with foams having at least 80% closed cells being most preferred for providing lightweight materials combining low permeability, good insulation values and good mechanical properties. Ideally, the amount of closed cells is at least 90%.

The foam may be manufactured using known techniques and using known foaming agents. In that respect a distinction needs to be made between a physical foaming agent and a chemical foaming agent. A physical foaming agent is a foaming agent that is used to generate the foam but in itself is inert to the foaming process, i.e. it does not chemically react. Examples of such foaming agents include low molecular weight organic solvents (like pentane) and gases like nitrogen and carbon dioxide. A chemical foaming agent is a material that upon activation, usually by heat, undergoes a chemical reaction thereby generating gases that allow expansion of the material in which the foaming agent is contained. Examples of such materials are known to a skilled person and include for example azo-dicarbonamide.

The viscosities of the polycarbonate and the polypropylene at the conditions under which the composition is formed, such as temperature and shear rate, preferably do not differ too much.

In order to improve compatibilisation it is preferred that the compatibiliser is pre-mixed either or both with the polycarbonate and the polypropylene prior to combining the polycarbonate with the polypropylene. Accordingly, a method of manufacture of the foam may comprise the steps of
- preparing a blend of the polypropylene and the compatibiliser,
- melt mixing the blend with the polycarbonate
- foaming the obtained composition,
   or
- preparing a blend of the polycarbonate and the compatibiliser,
- melt mixing the blend with the polypropylene
- foaming the obtained composition.

The foam based on the composition disclosed herein is a thermoplastic foam. Accordingly, the foam can be recycled similar to other thermoplastic materials. Alternatively, the composition is subjected to a step of physical crosslinking prior to the same being foamed. Such physical crosslinking may be performed by means of radiating the composition with an electron beam.

The foams can have a degree of expansion of from 1.05 - 40, preferably from 5 - 40, more preferably from 10 - 30, wherein the degree of expansion is defined as the ratio between the density of the composition in molded state prior to foaming and the density of the foamed composition after foaming, i.e. the density of the foam.

The present invention also relates to a foamed article comprising or consisting of the composition as disclosed herein and optionally residues of a chemical or physical foaming agent.

The present inventors found that the foam according to the invention has improved adhesion to polar substances or polar substrates as compared to polypropylene foams. Accordingly, in an embodiment the present invention also relates to an assembly comprising a foam or foamed article as disclosed herein and a polar substrate, wherein the foam or the article contacts and adheres at least in part to said polar substrate. The assembly can have many forms and substrates may include aluminium, steel, glass, and other polar polymer materials, preferably aluminium, steel and glass. The foams or foamed articles may adhere directly to the substrate. Alternatively, the foam or foamed articles are connected to the substrate using an adhesive material.

In yet another embodiment the present invention also relates to a printed or coated article comprising or consisting of the foam or foamed article as disclosed herein and a coating or printing layer covering a surface of the foam or foamed article at least in part. Any coating or printing material, like ink, which is suitable for printing or coating polymer materials may be used.

The present invention also relates to a method for the manufacture of a foamed article comprising the steps of
i) providing a composition comprising
   - 60 - 98 wt.% of polypropylene
   - 2 - 40 wt.% of aromatic polycarbonate
   - 0.1 - 10 wt.% of compatibiliser
      wherein
      - the compatibiliser is a BAB or AB type of block copolymer comprising a polypropylene block (A) and (a) polyester or polycarbonate block(s) (B), or wherein the compatibiliser is a graft copolymer of the type ABn having a polypropylene backbone (A) and polyester or polycarbonate blocks (B) grafted thereon, with n being at least 1, and
      - the polyester or polycarbonate block(s) have an average M/F ratio from 2 - 25, wherein M is the number of backbone carbon atoms in the polyester or polycarbonate not including carbonyl carbon atoms, and F is the number of ester or carbonate groups in the polyester or polycarbonate block(s),
      wherein the wt.% is based on the sum of the amount polypropylene, polycarbonate and compatibiliser,
ii) adding to said composition a physical or chemical foaming agent
iii) foaming the composition of step ii into a foamed article

The foaming agent may be added to the composition in an extruder and is mixed with the composition in molten state. This specifically applies when a physical foaming agent is used. When a chemical foaming agent is used, the same may be pre-mixed with the composition prior to the same being fed to an extruder or any other melt mixing device.

Also, if a physical foaming agent is used a foam may be directly obtained once the composition is extruded through a suitable die. Extrusion foaming is a technique known to the skilled person.

If the foaming agent is a chemical foaming agent then a foamed article may be obtained by first moulding the composition melt mixed with the foaming agent into a molded unfoamed intermediate article, followed by a step of foaming said intermediate article. The intermediate article may be a sheet obtained by extrusion or it may be an injection moulded article. The intermediate article may be subjected to a step of physical crosslinking using electron beam radiation prior to being foamed.

The present invention further relates to a composition comprising
- 60 - 98 wt.% of polypropylene
- 2 - 40 wt.% of aromatic polycarbonate
- 0.1 - 10 wt.% of compatibiliser
- physical or chemical foaming agent
   wherein
- the compatibiliser is a BAB or AB type of block copolymer comprising (a) polypropylene block A and a polyester or polycarbonate block(s) B, or wherein the compatibiliser is a graft copolymer of the type ABn having a polypropylene backbone A and polyester or polycarbonate block(s) B grafted thereon, with n being at least 1, and
- the polyester or polycarbonate block(s) B have an average M/F ratio from 2 - 25, wherein M is the number of backbone carbon atoms in the polyester or polycarbonate not including carbonyl carbon atoms, and F is the number of ester or carbonate groups in the polyester or polycarbonate block(s),
- wherein the wt.% is based on the sum of the amount polypropylene, polycarbonate and compatibiliser.

For the sake of completeness, it is noted that all preferred ranges and preferred materials disclosed in the context of the use of the composition without the foaming agent also apply to this composition.

The invention will be further elucidated by means of the following non-limiting examples.

### Examples

### Materials

ε-Caprolactone (CL) (97%, Sigma-Aldrich), ω-Pentadecalactone (PDL) (98%, Sigma-Aldrich) and ethylene brassylate (EB) (≥95% Sigma-Aldrich) were dried over CaH₂ and distilled under reduced pressure. Exxelor PO1020 was purchased from ExxonMobil. Methanol, pentamethyl heptane (from in house purification system) were used as received. Toluene (anhydrous, Sigma-Aldrich) and tetrahydrofuran (THF) (anhydrous, Sigma-Aldrich) were purified using an MBraun-SPS-800 purification column system and were kept in glass bottle with 4-Å molecular sieves under an inert atmosphere. 10-undecen-1-ol, ethanolamine and tin(II) 2-ethylhexanoate were purchased from Sigma-Aldrich. Methylaluminoxane (MAO) (30 wt. % solution in toluene) was purchased from Chemtura. Diethyl zinc (DEZ) (1.0 M solution in hexanes), triisobutylaluminum (TiBA) (1.0 M solution in hexanes), di-*n*-butylmagnesium (MgBu₂, 1.0 M solution in heptane), and 2,6-di-tert-butyl-4-methylphenol (BHT) (99 %, purum), were purchased from Sigma-Aldrich. *rac*-Me₂Si(2-Me-4-Ph-Ind)₂ZrCl₂ was purchased from MCAT GmbH, Konstanz, Germany.

PP531 is a semi-crystalline propylene homopolymer commercially available from SABIC having a melt flow rate of 0.30 g/10min (ISO 1133, 2.16 kg, 230°C).

PP500 is a semi-crystalline propylene homopolymer commercially available from SABIC having a melt flow rate of 3.1 g/10min (ISO 1133, 2.16 kg, 230°C).

PP108 is a heterophasic polypropylene commercially available from SABIC having a melt flow rate of 10 g/10min (ISO 1133, 2.16 kg, 230°C).

PC105 is a linear polycarbonate homopolymer commercially available from SABIC and having a melt flow rate of 7 g/10 min (ASTM D 1238, 1.2 kg, 300°C).

PC115 is a linear polycarbonate homopolymer having a melt flow rate of 60 g/10min (ASTM D 1238, 1.2 kg, 300°C).

Daploy WB140, commercially available from Borealis, is a high melt strength propylene homopolymer having a melt flow rate of 2.1 g/10min in accordance with ISO 1133 (230°C and 2.16 kg).

ExxelorPO1020, commercially available from ExxonMobil, is a maleic anhydride-grafted propylene homopolymer having a melt flow rate of 430 g/10 min in accordance with ISO 1133 (230°C and 2.16 kg).

### Measurement methods

Conversion of reactions was determined by NMR:
¹H NMR analysis (¹H-NMR) carried out at 80-110 °C using deuterated tetrachloroethane (TCE-d₂) as the solvent and recorded in 5 mm tubes on a Varian Mercury spectrometer operating at frequencies of 400 MHz. Chemical shifts in ppm versus TCE-d₂ were determined by reference to the residual solvent signal.

*M*ₙ*, M*_{w} and the polydispersity index (PDI, *Ð*_{M}) were determined as follows by size exclusion chromatography:
SEC measurements were performed at 150 °C on a Polymer Char GPC-IR^{®} built around an Agilent GC oven model 7890, equipped with an autosampler and the Integrated Detector IR4. 1,2-dichlorobenzene (oDCB) was used as an eluent at a flow rate of 1 mUmin. The SEC-data were processed using Calculations Software GPC One^{®}. The molecular weight was determined on the basis of polystyrene standards.

Melting (*T*ₘ) and crystallisation (*T*_{c}) temperatures as well as enthalpies of the transitions, melting and crystallisation peaks, were measured by differential scanning calorimetry (DSC) using a DSC Q100 from TA Instruments. The measurements were carried out at a heating and cooling rate of 10 °C·min⁻¹ from -60 °C to 210 °C. The transitions were deduced from the second heating and cooling curves.

Density analysis were carried out using PLT-A01 set for density determination available from KERN. The foam samples were immersed in water to determine the volume and the mass by weighing it on the balance. The volume determination is based on the Law of Archimedes.

The morphology of foam cell structures was determined with a JEOL JSM 7800-F Field Emission Scanning Electron Microscopy (FE-SEM) at an operating voltage of 5 kV. A piece of foam sample were cryogenically cut using an ultra sharp razor blade for the cross-sectional morphology characterisation. The foam cross section was viewed using the Large Depth of Focus (LDF) mode and the Lower Electron Detector (LED) detector in the FE-SEM. The LDF mode provides a larger depth of focus than conventional SEM mode, and is suitable for imaging of rough samples with micron size features. All the samples were sputter-coated with gold-palladium before SEM imaging in order to reduce the surface charging during imaging.

Uniaxial elongational flow using an extensional viscosity fixture measurement was conducted on an ARES rheometer at 160 °C under several elongational rates between 0.05 and 0.5 s⁻¹. The rectangular specimens with dimensions of 15 mm × 10 mm × 0.9 mm were fabricated by a compression molding at 210 °C under 100 kN in the hot press machine.

### Typical procedure for the synthesis of hydroxyl functionalised polypropylene via reactive extrusion (REX):

iPP-g-MAH (ExxelorPO1020: 0.43 wt.% maleic anhydride (MAH), 10.0 g, *M*ₙ = 22 kg.mol⁻¹, *Ð* = 4.4) with antioxidant (2500 ppm) was introduced into a co-rotating twin-screw extruder under nitrogen atmosphere set with different temperature zones 50-90-160-165-170-170-180-180 °C, respectively. Than ethanolamine was added to the extruder. The amount of ethanolamine was calculated according to the content of anhydride groups in ExxelorPO1020 (molar ratio of ethanolamine: anhydride was equal to 1.1:1). The mixture was processed and then cooled and granulated. The product was dried in a vacuum oven for 10 h at 70 °C.

### Typical procedure for the synthesis of hydroxyl functionalised polypropylene via catalytic route:

Polymerisation experiments were carried out in a stainless steel autoclave with an internal volume of 2.1 L. The reactor is equipped with interMIG stirrer, operated at 900 rpm. Pentamethyl heptane (PMH, 400 mL), was added into the autoclave. Propylene (typically 200 NI/h) was dosed via Brooks Mass flow controller into the headspace and the propylene was set at the desired pressure (9 bar). The temperature was set at 87 °C. Off-gas was continuously vented. Subsequently, the MAO (30 wt.% solution in toluene, 9 mmol) was dosed using the injection vessel with an additional 400 mL of PMH. After stirring the mixture for 15 - 20 min at 87 °C, a premixed solution of 10-undecen-1-oland TiBA (TiBA/C11=OH = 1, 0.85 M, 10 mL), DEZ (1M solution in hexane, 1 mL) and TiBA (1M solution in hexane, 4 mL) were introduced into the reactor under a nitrogen atmosphere with PMH through the injection Schlenk vessel. The mixture was stirred for 10 min and a solution of *rac*-dimethylsilyl bis(2-methyl-4-phenyl-1-indenyl) zirconium dichloride catalyst (6 pmol) in approximately 5 mL of toluene was injected into the reactor applying an over pressure of nitrogen. After dosing all the components, the total volume of the added PMH was 1 L. The reactor temperature was kept at 87 ± 3 °C by cooling with an oil LAUDA system. At the end of the reaction (20 min), the mixture was drawn off via a bottom valve. A mixture of acidified methanol (2.5 % v/v HCl) and Irganox 1010 was added and the resulting suspension was filtered, washed with demineralised water and dried at 60 °C in vacuo overnight.

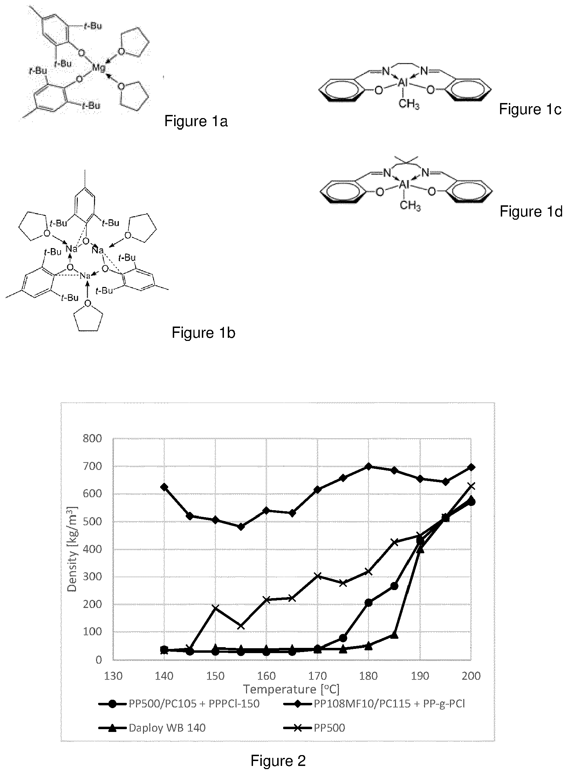

### Synthesis of Mg(BHT)₂(THF)₂ catalyst. (Figure 1a)

In the glovebox, 2,6-di-tert-butyl-4-methylphenol (BHT, 4.40 g, .20 mmol) was introduced into Schlenk glass and dissolved in dry tetrahydrofuran (30 mL). The mixture was cooled down to 0°C in an ice bath. Subsequently n-Bu₂Mg (3.89 ml of 1M solution in hexane, 20 mmol of *n*-Bu₂Mg) was added to BHT solution in THF and stirred at room temperature for 24h under nitrogen atmosphere. The solvent was removed under reduced pressure. A white powder was rinsed with dry heptane (3 × 15 mL) and dried under reduced pressure. Yield: 4.41 g (73.3%).

### Synthesis of Na₃(BHT)₃(THF)₃catalyst.(Figure 1b)

A mixture of 2,6-di-tert-butyl-4-methylphenol (8.8 g, 40 mmol) and NaH (1.00 g, 42 mmol) was stirred in tetrahydrofuran (30 mL) at room temperature for 24 h. After the reaction, a residual NaH was removed by filtration while the solvent was removed under reduced pressure. Thus obtained white powder was washed with heptane (3 × 15 mL) and dried in vacuo. Yield: 8.81 g (70.1%).

### Synthesis of aluminum-salen complex (Figure 1c)

N,N'-bis(salicylidene)ethylenediamine (2.0 g, 7.5 mmol) was suspended in toluene (30 mL) under N₂ flow. Subsequently, Al(CH₃)₃ (2 M solution in toluene, 3.75 mL, 7.5 mmol) was added via syringe and the mixture was stirred at room temperature for 1 h. The thus obtained solution was concentrated to half the original volume and pale yellow needles were isolated with a yield of 93 %.

### Synthesis of aluminum-salpen type complex (Figure 1d)

N,N'-bis(salicylidene)-2,2-dimethyl-1,3-propanediamine (2.0 g, 5.7 mmol) was suspended in toluene (30 mL) under N₂ flow. Subsequently, Al(CH₃)₃ (2 M solution in toluene, 2.85 mL, 5.7 mmol) was added via syringe and the mixture was stirred at room temperature for 1h. The thus obtained solution was concentrated to half the original volume and pale yellow crystals were isolated with a yield of 88 %.

### Typical procedure for the synthesis of PP-graft-PCL via transesterification:

The experiments were carried out in a co-rotating twin-screw extruder at 40-120-165-170-180-180-180-180-170-155-150 °C with a screw rotation speed of 65 rpm and throughput 3 kg/hr. Hydroxyl-functionalised polypropylene (PP-OH, *M*ₙ = 36200 g/mol, *M*_{w} = 166000 g/mol, *Ð*_{M} = 4.59 1995 g), polycaprolactone (PCL, 990 g, *M*ₙ= 4600 g/mol, *M*_{w} = 21900 g/mol, *Ð*_{M} = 4.7, M/F = 5/1) and stannous octoate as catalyst (Sn(Oct)₂, 15 g) were fed into the extruder. The process of extrusion was carried out using two feeders. From the first feeder PP-OH and from the second - blend of the other components were dosed. The mixture was processed and then cooled and granulated. The copolymer was dried in a vacuum oven for 10 h at 70 °C. The conversion of the hydroxyl-functionalised polypropylene was 63% and *M*_{w} of the copolymer 103.2 kg/mol.

The copolymers PP-*graft*-PCL 120, PP*-graft-*PCL 140, *PP-graft-*PCL 150, PP*-graft-*PCL 170, PP-*graft*-PCL 242 were prepared using PP-OH obtained by REX from ExxelorPO1020 and PCL with *M*_{w} = 120 kg/mol, 140 kg/mol, 150 kg/mol, 170 kg/mol, 242 kg/mol, using the same processing conditions.

### Typical procedure for the synthesis of PP-graft-PCL via catalytic Ring-Opening Polymerisation:

In the glovebox, catalyst (BHT)₂Mg(THF)₂ (400 mg, 0.659 mmol, *M*_{w} = 607 g/mol), an equimolar amount of PP-*graft*-C₁₁OH (0.372 mmol, 9.45 g, mass was calculated in relation to the number of hydroxyl groups in polymer chain from ¹H NMR, *M*ₙ = 25400 g/mol, *Ð*_{M} = 2.42, 1.77 gr OH/macromolecule) were placed in the reactor. Dry toluene was added (112.5 g). The mixture was removed from the glovebox and put in the oil bath at 115°C to perfectly dissolve catalyst and polypropylene. After that, the monomer (dry caprolactone) (42.5 g, 0.372 mol) was added. The reaction was carried out at 115°C for 5 hours. A mixture of acidified methanol (2.5 % v/v HCl) and Irganox 1010 was added and the resulting suspension was filtered, washed with methanol and dried at 50 °C in vacuo overnight. The yield of the reaction was 97% and *M*_{w} of the copolymer 239.2 kg/mol.

### Typical procedure for the synthesis of PP-block-PPDL via catalytic Ring-Opening Polymerisation

A glass crimp cap vial was charged with toluene (1.5 mL), PDL (1.08 g, 4.5 mmol, M/F = 14), hydroxyl end-capped iPP (17.4 mg, 8.7 pmol) and aluminum salpen catalyst (3.05 mg, 8.7 pmol). All manipulations were carried out in the glovebox. Then, the mixture was removed from the glovebox and stirred in an oil bath at 100 °C. The progress of the reaction was followed by ¹H NMR spectroscopy by taking aliquots at set time intervals. The synthesized copolymer was cooled to room temperature and quenched using acidified methanol, isolated and dried in vacuum at room temperature for 18 h. The yield of the reaction was 93% and the *M*_{w} of the copolymer 176 kg/mol.

### Typical procedure for the synthesis of PP-graft-PPDL via catalytic Ring-Opening Polymerisation:

A glass crimp cap vial was charged with toluene (1.5 mL), PDL (1.1 g, 4.5 mmol, M/F = 14), hydroxyl-functionalised iPP (4.9 mg, 8.7 pmol) and aluminium salen catalyst (-3.05 mg, 8.7 pmol). All manipulations were carried out in the glovebox. Then, the mixture was removed from the glovebox and stirred in an oil bath at 100 °C. The progress of the reaction was followed by ¹H NMR spectroscopy by taking aliquots at set time intervals. The synthesized copolymer was cooled to room temperature and quenched using acidified methanol, isolated and dried in vacuum at room temperature for 18 h. The yield of the reaction was 96% and *M*_{w} of the copolymers 107 kg/mol.

### Typical polymerisation procedure of EB via catalytic Ring-Opening Polymerisation:

In a glovebox, benzyl alcohol (0,40 mg, 3,7 pmol), Na₃(BHT)₃(THF)₃ catalyst (1.16 mg, 1.23 pmol) and ethylene brassylate (500 mg, 1.85 mmol, M/F = (11+2)/2 = 6.5) were introduced into a small glass crimp cap vial and the vial was capped. The reaction mixture was removed from the glovebox and stirred for 3 h in a carrousel reactor at 200 °C. For all reactions, an aliquot of crude polymer was withdrawn at the end of the polymerisation reaction in order to determine the conversion of the monomers by ¹H NMR spectroscopy. The reaction was then stopped by quenching the crude product with acidified methanol (5 mL). The polymer was isolated and dried at 40°C for 24 h under reduced pressure. The yield of the reaction was 94% and *M*_{w} of the copolymer 96 kg/mol.

### Typical procedure for the synthesis of PP-block-PEB copolymers via transesterification reaction:

Chain-end hydroxyl-functionalised isotactic PP (1, 6.0 g, *M*ₙ = 14.3 kg/mol, *Ð*_{M} = 1.9) and PEB (3.0 g, *M*ₙ = 40.9 kg/mol, *Ð*_{M} = 2.7, M/F = (11+2)/2 = 6.5) with antioxidant Irganox 1010 (2500 ppm) were fed into a co-rotating twin-screw mini-extruder at 160 °C with a screw rotation rate set at 100 rpm. The polymers were premixed for 5 minutes. After this time tin (II) 2-ethylhexanoate (0.09 g, 0.22 mmol) as catalyst was added and the mixture was stirred for an additional 5 minutes. Afterwards the extruder chamber was cooled and evacuated. The yield of the reaction was 73% and the *M*_{w} of the product 91 kg/mol.

### Typical procedure for preparation of PP/PC blends:

800 g of PP (PP 500P, MFR = 3.1 g/10 min (230 °C/2.16 kg)) and 200 g of PC (PC105, MFR = 7 g/10 min (300 °C/1.2 kgf)) with Irganox1010 (12.5g) were fed into a co-rotating twin-screw extruder. The mixture was processed at 40-180-210-230-240-240-240-230-200-190-180 °C with a screw rotation speed of 60 rpm and throughput 2.5 kg/hr. The process of extrusion was carried out using two feeders. The mixture was processed and then cooled and granulated. The blend was dried in a vacuum oven for 10 h at 70 °C and investigated in terms of its morphology, static mechanical properties and surface properties.

### Typical procedure for preparation of PP/PC blends compatibilised by PP-graft-PCL copolymer:

770 g of PP (PP 500P, MFR = 3.1 g/10 min (230 °C/2.16 kg)) and 180 g of PC (PC105, MFR = 7 g/10 min (300 °C/1.2 kgf)) with Irganox1010 (12.5g) and 50 g of *PP-graft-*PCL were fed into a co-rotating twin-screw extruder. The mixture was processed at 40-180-210-230-240-240-240-230-200-190-180 °C with a screw rotation speed of 60 rpm and throughput 2.5 kg/hr. The process of extrusion was carried out using two feeders. From the first feeder PP and from the second - blend of the other components were introduced. The mixture was processed and then cooled and granulated. The blend was dried in a
vacuum oven for 10 h at 70 °C and investigated in terms of its morphology, static mechanical properties and surface properties.

The procedure above was followed for all blends reported in Tables 1 and 2 below with the corresponding materials and amounts as indicated in Tables 1 and 2 below.

The nature of the copolymers and the composition of the blends for the foam according to the invention is shown in Tables 1and 2 below.

**Table 1**

| | Entry | PP-*graft*-PCL | | PP | PC | PP/PC | PP-*graft-*PCL |
|---|---|---|---|---|---|---|---|
| | | *M*ₙ [kg·mol⁻¹] | *M*_{w} [kg·mol⁻¹] | | | | |
| | **REX (PP-PCL)** | | | | | | |
| 1 | PP-*graft*-PCL21.9 | 13.0 | 103.2 | PP531 | PC 105 | 87/8 | 5 |
| 2 | PP-*graft*-PCL21.9 | 13.0 | 103.2 | PP531 | PC 105 | 77/18 | 5 |
| 3 | PP-*graft*-PCL21.9 | 13.0 | 103.2 | PP531 | PC115 | 87/8 | 5 |
| 4 | PP-*graft*-PCL21.9 | 13.0 | 103.2 | PP531 | PC115 | 77/18 | 5 |
| 5 | PP-*graft*-PCL21.9 | 13.0 | 103.2 | PP500 | PC 105 | 87/8 | 5 |
| 6 | PP-*graft*-PCL21.9 | 13.0 | 103.2 | PP500 | PC 105 | 77/18 | 5 |
| 7 | PP-*graft*-PCL120⁺ | 28.5 | 115.2 | PP500 | PC 105 | 77/18 | 5 |
| 8 | PP-*graft*-PCL 140 | 30.0 | 104.3 | PP500 | PC 105 | 77/18 | 5 |
| 9 | PP-*graft*-PCL150 | 18.4 | 99.7 | PP500 | PC 105 | 77/18 | 5 |
| 10 | PP-*graft*-PCL170 | 26.4 | 100.5 | PP500 | PC 105 | 77/18 | 5 |
| 11 | PP-*graft*-PCL242 | 25.7 | 90.5 | PP500 | PC 105 | 77/18 | 5 |
| 12 | PP-*graft*-PCL21.9 | 13.0 | 103.2 | PP108MF10 | PC115 | 77/18 | 5 |

**Table 2**

| | Entry | PP-OH | PP-*graft*-PCL | | PP | PC | PP/PC | PP-*graft-*PCL |
|---|---|---|---|---|---|---|---|---|
| | | *M*_{w} [kg·mol⁻¹] | *M*ₙ [kg·mol⁻¹] | *M*_{w} [kg·mol⁻¹] | | | | |
| | **ROP(ss-PP-PCL)** | | | | | | | |
| 13 | PP-*graft*-PCL | 61.5 | 61.2 | 239.2 | PP500 | PC105 | 87/8 | 5 |
| 14 | PP-*graft*-PCL⁺ | 61.5 | 61.2 | 239.2 | PP500 | PC105 | 77/18 | 5 |
| 15 | PP-*graft*-PCL | 61.5 | 61.2 | 239.2 | PP500 | PC105 | 77/18 | 3 |
| 16 | PP-*graft*-PCL | 61.5 | 61.2 | 239.2 | PP500 | PC105 | 77/18 | 10 |
| 17 | PP-*graft*-PCL | 61.5 | 61.2 | 239.2 | PP531 | PC105 | 87/8 | 5 |
| 18 | PP-*graft*-PCL | 61.5 | 61.2 | 239.2 | PP530 | PC105 | 77/18 | 5 |
| 19 | PP-*graft*-PCL | 61.5 | 61.2 | 239.2 | PP531 | PC115 | 87/8 | 5 |
| 20 | PP-*graft*-PCL | 61.5 | 61.2 | 239.2 | PP530 | PC115 | 77/18 | 5 |
| 21 | PP-*graft*-PCL | 61.5 | 19.1 | 150.6 | PP500 | PC105 | 87/8 | 5 |
| 22 | PP-*graft*-PCL | 61.5 | 19.1 | 150.6 | PP500 | PC105 | 77/18 | 5 |
| 23 | PP-*graft*-PCL | 61.5 | 19.1 | 150.6 | PP500 | PC105 | 77/18 | 3 |
| 24 | PP-*graft*-PCL | 61.5 | 19.1 | 150.6 | PP500 | PC105 | 77/18 | 10 |
| 25 | PP-*graft*-PCL | 61.5 | 19.1 | 150.6 | PP531 | PC105 | 87/8 | 5 |
| 26 | PP-*graft*-PCL | 61.5 | 19.1 | 150.6 | PP530 | PC105 | 77/18 | 5 |
| 27 | PP-*graft*-PCL | 61.5 | 19.1 | 150.6 | PP531 | PC115 | 87/8 | 5 |
| 28 | PP-*graft*-PCL | 61.5 | 19.1 | 150.6 | PP530 | PC115 | 77/18 | 5 |
| 29 | PP-*graft*-PCL | 61.5 | 19.1 | 150.6 | PP108 | PC115 | 87/8 | 5 |
| 30 | PP-*graft*-PCL | 61.5 | 19.1 | 150.6 | PP108 | PC115 | 77/18 | 5 |

Foaming experiments were performed on a lab scale foaming unit consisting on an 11mm co-rotating twin screw extruder for melting the polymer composition and injection of the physical foaming agent iso-butane. The outlet of the extruder is directly fed into a static mixer consisting of three zones (entrance zone, mixer zone and tool zone) for further mixing the foaming agent with the molten polymer composition and controlling of the temperature. The amount of polymer composition fed to the extruder was 290 g/h and the amount of iso-butane that was dosed in the extruder was kept at a constant value of 28,4 g/hr. At the start of the experiment the mixer and tool zone temperatures were set at 200°C. During the experiments the temperatures of the mixer and tool zones were lowered in steps of 5 - 10 °C each time allowing five minutes for stabilisation of the process at each temperature setting. Once the temperatures were stabilised the tool zone pressure was set at 30 bars by adjusting the opening of the die. Initial settings of the foaming unit are per the Table 3 below.

**Table 3**

| | Screwspeed | [rpm] | 75 |
|---|---|---|---|
| Extruder | T1 | °C | 80 |
| | T2 | °C | 160 |
| | T3 | °C | 210 |
| | T4 | °C | 210 |
| | T5 | °C | 210 |
| | T6 | °C | 210 |
| | T7 | °C | 210 |
| | T8 | °C | 210 |
| Static mixer | T_entrance | °C | 200 |
| | T_mixer | °C | 200 |
| | T_Tool | °C | 200 |
| | P_Tool | Bar | 30 |
| Foaming die | Temperature | °C | 200 |

| | | | |
|---|---|---|---|
| T1 - T8 are the temperatures of the sections 1-8 of the extruder. | | | |

Figure 1 shows examples of catalyst complexes suitable to realise the invention
Figure 2 shows the density of the foams based on:
   - Entry 10: PP500 (-x), PP500/PC105 compatibilised by *PP-graft-PCL* copolymer (-•-)
   - Entry 30: PP108MF10/PC115 compatibilised by PP-*graft*-PCL copolymer (-+-)
   - Daploy WB140 (-A-)
   - PP500

The horizontal axis shows the temperature of the foaming die, while the veritcal axis shows the density of the foamed material. The curves essentially show that compositions as disclosed herein can indeed be foamed while the graph also indicates that foaming Entry 30 (based on PP108, a heterophasic polypropylene together with a high flow polycarbonate), is more difficult and only a moderate degree of foaming can be obtained.

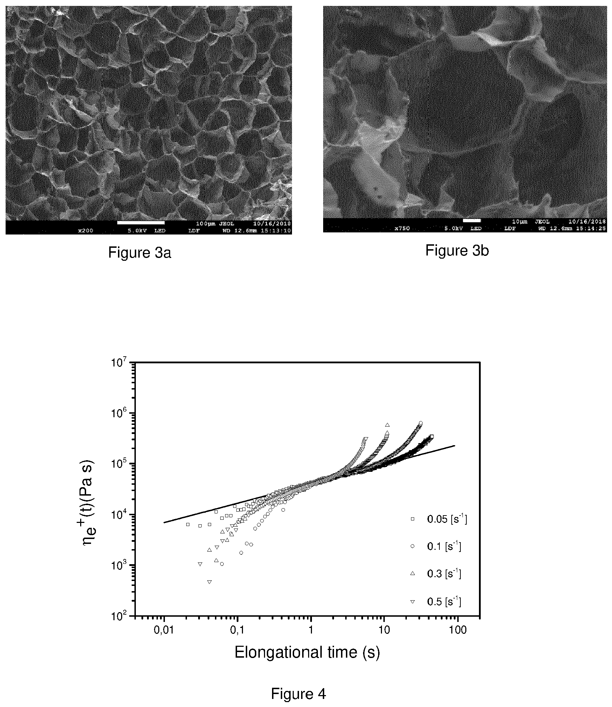

Figure 3 shows SEM analysis of the foam based on Entry 10 (PP500/PC105 compatibilised by PP*-graft-*PCL copolymer). The pictures show that the cell walls are predominantly continuous meaning that the foam is predominantly a closed cell foam.

Figure 4 shows elongational viscosity as a function of elongational time of the foam based on Entry 10 (PP500/PC105 compatibilised by PP*-graft-*PCL copolymer) under various Hencky strain rates. The graph shows that upon higher deformation speeds the viscosity increases. This kind of behaviour is favourable for the foaming process and indicative for sufficient melt strength.

## Claims

1. Use of a composition comprising
- 60 - 98 wt.% of polypropylene
- 2 - 40 wt.% of aromatic polycarbonate
- 0.1 - 10 wt.% of compatibiliser
wherein
- the compatibiliser is a BAB or AB type of block copolymer comprising a polypropylene block A and (a) polyester or polycarbonate block(s) B, or wherein the compatibiliser is a graft copolymer of the type ABn having a polypropylene backbone A and polyester or polycarbonate block(s) B grafted thereon, with n being at least 1, and
- the polyester or polycarbonate block(s) B have an average M/F ratio from 2 - 25, wherein M is the number of backbone carbon atoms in the polyester or polycarbonate not including carbonyl carbon atoms, and F is the number of ester or carbonate groups in the polyester or polycarbonate block(s),
- wherein the wt.% is based on the sum of the amount polypropylene, polycarbonate and compatibiliser,
for the manufacture of a foamed article.

2. The use of claim 1 wherein the M/F ratio is from 2-10, preferably from 3 - 7.

3. The use of claim 1 or 2 wherein the amount of compatibiliser is from 1 - 8 wt.%.

4. The use of any one or more of claims 1-3 wherein in the compatibiliser block(s) B is/are a polyester, preferably selected from polyesters obtained by the ring opening polymerisation of β-butyrolactone, glycolide, L-lactide, ε-caprolactone, cyclic butylene adipate and cyclic ethylene brassylate.

5. The use of any one or more of claims 1-4 wherein in the compatibiliser the polypropylene block or backbone A is a propylene homopolymer or a random propylene and ethylene or C₄ - C₈ alpha olefin copolymer containing at most 5 wt.%, on the basis of the weight of the backbone, of ethylene or C₄ - C₈ alpha olefin.

6. The use of any one or more of claims 1-5 wherein the polypropylene is a propylene homopolymer or a random propylene and ethylene or C₄-C₈ alpha olefin copolymer containing at most 5 wt.%, on the basis of the weight of the polypropylene, of said ethylene or a C₄ - C₈ alpha olefin.

7. The use of any one or more of claims 1 - 6 wherein the amount of polypropylene is at least 70 wt.%, preferably at least 80 wt.% and the amount of aromatic polycarbonate is from 5 - 20 wt.% preferably from 10- 20 wt.%.

8. Use of a composition according to any one or more of claims 1 - 7 in a direct extrusion foaming process.

9. The use of one of the preceding claim for the manufacture of a foamed article having a percentage of closed cells of at least 50% as determined in accordance with ASTM D2856.

10. The use of one of the preceding claim, wherein the foamed article has a degree of expansion of from 1.05 - 40, preferably from 5 - 40, more preferably from 10 - 30, wherein the degree of expansion is defined as the ratio between the density of the composition in molded state prior to foaming and the density of the foamed composition after foaming measured in accordance with the description.

11. A foamed article comprising or consisting of the composition as defined in any one or more of claims 1 - 7 and optionally residues of a chemical or physical foaming agent.

12. A method for the manufacture of a foamed article comprising the steps of
i) providing a composition comprising
- 60 - 98 wt.% of polypropylene
- 2 - 40 wt.% of aromatic polycarbonate
- 0.1 - 10 wt.% of compatibiliser
wherein
- the compatibiliser is a BAB or AB type of block copolymer comprising a polypropylene block A and (a) polyester or polycarbonate block(s) B, or wherein the compatibiliser is a graft copolymer of the type ABn having a polypropylene backbone A and polyester or polycarbonate block(s) B grafted thereon, with n being at least 1, and
- the polyester or polycarbonate block(s) have an average M/F ratio from 2 - 25, wherein M is the number of backbone carbon atoms in the polyester or polycarbonate not including carbonyl carbon atoms, and F is the number of ester or carbonate groups in the polyester or polycarbonate block(s)
wherein the wt.% is based on the sum of the amount polypropylene, polycarbonate and compatibiliser,
ii) adding to said composition a physical or chemical foaming agent
iii) foaming the composition of step ii into a foamed article

13. The method of claim 12 wherein the foaming agent is added to the composition in an extruder and is mixed with the composition in molten state.

14. The method of claim 12 or 13 wherein the blowing agent is a physical foaming agent and wherein the foamed article is obtained by extruding the composition through a die.

15. The method of any one or more of claims 11 - 14 wherein the foaming agent is a chemical foaming agent and wherein the foamed article is obtained by first molding the composition of step ii) into a unfoamed intermediate article, followed by a step of foaming said unfoamed intermediate.

16. Composition comprising
- 60 - 98 wt.% of polypropylene
- 2 - 40 wt.% of aromatic polycarbonate
- 0.1 - 10 wt.% of compatibiliser
- chemical foaming agent
wherein
- the compatibiliser is a BAB or AB type of block copolymer comprising a polypropylene block A and (a) polyester or polycarbonate block(s) B, or wherein the compatibiliser is a graft copolymer of the type ABn having a polypropylene backbone A and polyester or polycarbonate block(s) B grafted thereon, with n being at least 1, and
- the polyester or polycarbonate block(s) B have an average M/F ratio from 2 - 25, wherein M is the number of backbone carbon atoms in the polyester or polycarbonate not including carbonyl carbon atoms, and F is the number of ester or carbonate groups in the polyester or polycarbonate block(s),
- wherein the wt.% is based on the sum of the amount polypropylene, polycarbonate and compatibiliser.

## Patentansprüche

1. Verwendung einer Zusammensetzung, umfassend
- 60 - 98 Gew.-% Polypropylen
- 2-40 Gew.-% aromatisches Polycarbonat
- 0,1 - 10 Gew.-% Kompatibilisator
wobei
- der Kompatibilisator ein Blockcopolymer vom Typ BAB oder AB ist, das einen Polypropylenblock A und einen Polyester- oder Polycarbonatblock oder -blöcke B umfasst, oder wobei der Kompatibilisator ein Pfropfcopolymer vom Typ ABn mit einer Polypropylenhauptkette A und darauf gepfropften Polyester- oder Polycarbonatblock oder -blöcken B ist, wobei n mindestens 1 ist, und
- der/die Polyester- oder Polycarbonatblock oder -blöcke B ein durchschnittliches M/F-Verhältnis von 2 - 25 aufweisen, wobei M die Anzahl der Hauptkettenkohlenstoffatome in dem Polyester oder Polycarbonat ohne die Carbonylkohlenstoffatome ist und F die Anzahl der Estergruppen in dem/den Polyester- oder Polycarbonatblock oder -blöcken ist,
- wobei sich die Gew.-% auf die Summe der Menge an Polypropylen, Polycarbonat und Kompatibilisator beziehen,
für die Herstellung eines geschäumten Gegenstands.

2. Verwendung nach Anspruch 1, wobei das M/F-Verhältnis 2-10, vorzugsweise 3-7, beträgt.

3. Verwendung nach Anspruch 1 oder 2, wobei die Menge an Kompatibilisator 1 - 8 Gew.-% beträgt.

4. Verwendung nach einem oder mehreren der Ansprüche 1-3, wobei in dem/den Kompatibilisatorblock oder -blöcken B ein Polyester ist/sind, vorzugsweise ausgewählt aus Polyestern, die durch die ringöffnende Polymerisation von β-Butyrolacton, Glycolid, L-Lactid, ε- Caprolacton, cyclischem Butylenadipat und cyclischem Ethylenbrassylat erhalten werden.

5. Verwendung nach einem oder mehreren der Ansprüche 1-4, wobei in dem Kompatibilisator der Polypropylenblock oder die Hauptkette A ein Propylenhomopolymer oder ein zufälliges Propylen und Ethylen oder C₄-C₈-Alpha-Olefin-Copolymer ist, das höchstens 5 Gew.-%, auf Basis des Gewichts der Hauptkette, Ethylen oder C₄-C₈-Alpha-Olefin enthält.

6. Verwendung nach einem oder mehreren der Ansprüche 1-5, wobei das Polypropylen ein Propylenhomopolymer oder ein zufälliges Propylen und Ethylen oder C₄-C₈-Alpha-Olefin-Copolymer ist, das höchstens 5 Gew.-%, auf Basis des Gewichts des Polypropylens, des Ethylens oder eines C₄-C₈-Alpha-Olefins enthält.

7. Verwendung nach einem oder mehreren der Ansprüche 1-6, wobei die Menge an Polypropylen mindestens 70 Gew.-%, vorzugsweise mindestens 80 Gew.-% beträgt und die Menge an aromatischem Polycarbonat 5-20 Gew.-%, vorzugsweise 10-20 Gew.-%, beträgt.

8. Verwendung einer Zusammensetzung nach einem oder mehreren der Ansprüche 1-7 in einem Direktextrusionsschäumungsprozess.

9. Verwendung nach einem vorstehenden Anspruch zur Herstellung eines geschäumten Gegenstands mit einem Prozentsatz geschlossener Zellen von mindestens 50 %, bestimmt nach ASTM D2856.

10. Verwendung nach einem vorstehenden Anspruch, wobei der geschäumte Gegenstand einen Expansionsgrad von 1,05 - 40, vorzugsweise von 5 - 40, bevorzugter von 10 - 30 aufweist, wobei der Expansionsgrad als das Verhältnis zwischen der Dichte der Zusammensetzung im geformten Zustand vor dem Schäumen und der Dichte der geschäumten Zusammensetzung nach dem Schäumen definiert ist, gemessen gemäß der Beschreibung.

11. Geschäumter Gegenstand, der die in einem oder mehreren der Ansprüche 1 - 7 definierte Zusammensetzung und optional Reste eines chemischen oder physikalischen Schäumungsmittels umfasst oder daraus besteht.

12. Verfahren zur Herstellung eines geschäumten Gegenstands, das die folgenden Schritte umfasst
i) Bereitstellen einer Zusammensetzung, umfassend
- 60 - 98 Gew.-% Polypropylen
- 2-40 Gew.-% aromatisches Polycarbonat
- 0,1 - 10 Gew.-% Kompatibilisator
wobei
- der Kompatibilisator ein Blockcopolymer vom Typ BAB oder AB ist, das einen Polypropylenblock A und einen Polyester- oder Polycarbonatblock oder -blöcke B umfasst, oder wobei der Kompatibilisator ein Pfropfcopolymer vom Typ ABn mit einer Polypropylenhauptkette A und darauf gepfropften Polyester- oder Polycarbonatblock oder -blöcken B ist, wobei n mindestens 1 ist, und
- der/die Polyester- oder Polycarbonatblock oder -blöcke ein durchschnittliches M/F-Verhältnis von 2 - 25 aufweisen, wobei M die Anzahl der Hauptkettenkohlenstoffatome in dem Polyester oder Polycarbonat ohne die Carbonylkohlenstoffatome ist und F die Anzahl der Estergruppen in dem/den Polyester- oder Polycarbonatblock oder -blöcken ist,
wobei sich die Gew.-% auf die Summe der Menge an Polypropylen, Polycarbonat und Kompatibilisator beziehen,
ii) Zusetzen eines physikalischen oder chemischen Schäumungsmittels zu der Zusammensetzung
iii) Schäumen der Zusammensetzung von Schritt ii zu einem geschäumten Gegenstand

13. Verfahren nach Anspruch 12, wobei das Schäumungsmittel der Zusammensetzung in einem Extruder zugesetzt und mit der Zusammensetzung im geschmolzenen Zustand vermischt wird.

14. Verfahren nach Anspruch 12 oder 13, wobei das Treibmittel ein physikalisches Schäumungsmittel ist und wobei der geschäumte Gegenstand durch Extrudieren der Zusammensetzung durch eine Düse erhalten wird.

15. Verfahren nach einem oder mehreren der Ansprüche 11-14, wobei das Schäumungsmittel ein chemisches Schäumungsmittel ist und wobei der geschäumte Gegenstand erhalten wird, indem zuerst die Zusammensetzung aus Schritt ii) zu einem ungeschäumten Zwischengegenstand geformt wird, gefolgt von einem Schritt des Aufschäumens des ungeschäumten Zwischenprodukts.

16. Zusammensetzung, umfassend
- 60 - 98 Gew.-% Polypropylen
- 2-40 Gew.-% aromatisches Polycarbonat
- 0,1 - 10 Gew.-% Kompatibilisator
- chemisches Schäumungsmittel
wobei
- der Kompatibilisator ein Blockcopolymer vom Typ BAB oder AB ist, das einen Polypropylenblock A und einen Polyester- oder Polycarbonatblock oder -blöcke B umfasst, oder wobei der Kompatibilisator ein Pfropfcopolymer vom Typ ABn mit einer Polypropylenhauptkette A und darauf gepfropften Polyester- oder Polycarbonatblock oder -blöcken B ist, wobei n mindestens 1 ist, und
- der/die Polyester- oder Polycarbonatblock oder -blöcke B ein durchschnittliches M/F-Verhältnis von 2 - 25 aufweisen, wobei M die Anzahl der Hauptkettenkohlenstoffatome in dem Polyester oder Polycarbonat ohne die Carbonylkohlenstoffatome ist und F die Anzahl der Estergruppen in dem/den Polyester- oder Polycarbonatblock oder -blöcken ist,
- wobei sich die Gew.-% auf die Summe der Menge an Polypropylen, Polycarbonat und Kompatibilisator beziehen.

## Revendications

1. Utilisation d'une composition comprenant
- 60-98 % en poids de polypropylène
- 2-40 % en poids de polycarbonate aromatique
- 0,1-10 % en poids d'agent de compatibilité
dans laquelle
- l'agent de compatibilité est un copolymère séquencé de type BAB ou AB comprenant une séquence polypropylène A et une ou des séquences polyester ou polycarbonate B, ou dans laquelle l'agent de compatibilité est un copolymère greffé du type ABn présentant un squelette polypropylène A et une ou des séquences polyester ou polycarbonate B greffées dessus, n étant au moins égal à 1, et
- la ou les séquences polyester ou polycarbonate B présentent un rapport M/F moyen de 2-25, dans laquelle M est le nombre d'atomes de carbone de squelette dans le polyester ou le polycarbonate n'incluant pas les atomes de carbone carbonyle, et F est le nombre de groupes ester ou carbonate dans la ou les séquences polyester ou polycarbonate,
- dans laquelle le % en poids est basé sur la somme de la quantité de polypropylène, de polycarbonate et d'agent de compatibilité,
pour la fabrication d'un article moussé.

2. Utilisation selon la revendication 1, dans laquelle le rapport M/F est de 2-10, de préférence de 3-7.

3. Utilisation selon la revendication 1 ou 2, dans laquelle la quantité d'agent de compatibilité est de 1-8 % en poids.

4. Utilisation selon une ou plusieurs quelconques des revendications 1-3, dans laquelle, dans l'agent de compatibilité, la ou les séquences B est/sont un polyester, de préférence choisi parmi les polyesters obtenus par polymérisation par ouverture de cycle de la β-butyrolactone, du glycolide, du L-lactide, de la ε-caprolactone, de l'adipate de butylène cyclique et du brassylate d'éthylène cyclique.

5. Utilisation selon une ou plusieurs quelconques des revendications 1-4, dans laquelle, dans l'agent de compatibilité, la séquence polypropylène ou le squelette A est un homopolymère de propylène ou un copolymère aléatoire de propylène et d'éthylène ou d'alpha-oléfine en C₄ - C₈ contenant au plus 5 % en poids, sur la base du poids du squelette, d'éthylène ou d'alpha-oléfine en C₄ - C₈.

6. Utilisation selon une ou plusieurs quelconques des revendications 1-5, dans laquelle le polypropylène est un homopolymère de propylène ou un copolymère aléatoire de propylène et d'éthylène ou d'alpha-oléfine en C₄-C₈ contenant au plus 5 % en poids, sur la base du poids du polypropylène, dudit éthylène ou d'une alpha-oléfine en C₄ - C₈.

7. Utilisation selon une ou plusieurs quelconques des revendications 1-6, dans laquelle la quantité de polypropylène est d'au moins 70 % en poids, de préférence d'au moins 80 % en poids et la quantité de polycarbonate aromatique est de 5-20 % en poids, de préférence de 10-20 % en poids.

8. Utilisation d'une composition selon une ou plusieurs quelconques des revendications 1-7 dans un processus de moussage par extrusion directe.

9. Utilisation selon l'une des revendications précédentes pour la fabrication d'un article moussé présentant un pourcentage de cellules fermées d'au moins 50 %, tel que déterminé conformément à la norme ASTM D2856.

10. Utilisation selon l'une des revendications précédentes, dans laquelle l'article moussé présente un degré d'expansion de 1,05-40, de préférence de 5-40, plus préférentiellement de 10-30, dans laquelle le degré d'expansion est défini comme le rapport entre la densité de la composition à l'état moulé avant moussage et la densité de la composition moussée après moussage mesurée conformément à la description.

11. Article moussé comprenant ou consistant en la composition telle que définie selon une ou plusieurs quelconques des revendications 1-7 et éventuellement des résidus d'un agent moussant chimique ou physique.

12. Procédé de fabrication d'un article moussé comprenant les étapes de
i) fourniture d'une composition comprenant
- 60-98 % en poids de polypropylène
- 2-40 % en poids de polycarbonate aromatique
- 0,1-10 % en poids d'agent de compatibilité
dans lequel
- l'agent de compatibilité est un copolymère séquencé de type BAB ou AB comprenant une séquence polypropylène A et une ou des séquences polyester ou polycarbonate B, ou dans lequel l'agent de compatibilité est un copolymère greffé du type ABn présentant un squelette polypropylène A et une ou des séquences polyester ou polycarbonate B greffées dessus, n étant au moins égal à 1, et
- la ou les séquences polyester ou polycarbonate présentent un rapport M/F moyen de 2-25, dans lequel M est le nombre d'atomes de carbone de squelette dans le polyester ou le polycarbonate, n'incluant pas les atomes de carbone carbonyle, et F est le nombre de groupes ester ou carbonate dans la ou les séquences polyester ou polycarbonate
dans lequel le % en poids est basé sur la somme de la quantité de polypropylène, de polycarbonate et d'agent de compatibilité,
ii) ajout à ladite composition d'un agent moussant physique ou chimique
iii) moussage de la composition de l'étape ii en un article moussé.

13. Procédé selon la revendication 12 dans lequel l'agent moussant est ajouté à la composition dans une extrudeuse et est mélangé avec la composition à l'état fondu.

14. Procédé selon la revendication 12 ou 13, dans lequel l'agent gonflant est un agent moussant physique et dans lequel l'article moussé est obtenu en extrudant la composition à travers une filière.

15. Procédé selon une ou plusieurs quelconques des revendications 11-14, dans lequel l'agent moussant est un agent moussant chimique et dans lequel l'article moussé est obtenu en moulant d'abord la composition de l'étape ii) en un article intermédiaire non moussé, suivi d'une étape de moussage dudit article intermédiaire non moussé.

16. Composition comprenant
- 60-98 % en poids de polypropylène
- 2-40 % en poids de polycarbonate aromatique
- 0,1-10 % en poids d'agent de compatibilité
- un agent moussant chimique
dans laquelle
- l'agent de compatibilité est un copolymère séquencé de type BAB ou AB comprenant une séquence polypropylène A et une ou des séquences polyester ou polycarbonate B, ou dans laquelle l'agent de compatibilité est un copolymère greffé du type ABn présentant un squelette polypropylène A et une ou des séquences polyester ou polycarbonate B greffées dessus, n étant au moins égal à 1, et
- la ou les séquences polyester ou polycarbonate B présentent un rapport M/F moyen de 2-25, dans laquelle M est le nombre d'atomes de carbone de squelette dans le polyester ou le polycarbonate n'incluant pas les atomes de carbone carbonyle, et F est le nombre de groupes ester ou carbonate dans la ou les séquences polyester ou polycarbonate,
- dans laquelle le % en poids est basé sur la somme de la quantité de polypropylène, de polycarbonate et d'agent de compatibilité.
